Europäisches Patentamt

European Patent Office

Office européen des brevets

(19)

(11) Numéro de publication: **0 336 866**

**A1**

## (12) DEMANDE DE BREVET EUROPEEN

(21) Numéro de dépôt: 89440020.9

(22) Date de dépôt: 02.03.89

(51) Int. Cl.⁴: **F 16 L 37/08**

(30) Priorité: 08.03.88 FR 8803156

(43) Date de publication de la demande:
**11.10.89 Bulletin 89/41**

(84) Etats contractants désignés:
**AT BE CH DE ES GB GR IT LI LU NL SE**

(71) Demandeur: **SOCIETE DES FLEXIBLES ANOFLEX
Société Anonyme dite
29, Avenue Barthélemy-Thimonnier
F-69300 Caluire et Cuire (FR)**

(72) Inventeur: **Coya, Raymond
Impasse Jourdan
F-69008 Lyon (FR)**

(74) Mandataire: **Aubertin, François
Cabinet Lepage & Aubertin Innovations et Prestations 4,
rue de Haguenau
F-67000 Strasbourg (FR)**

(54) **Raccord démontable.**

(57)     Un dispositif de raccordement rapide pour tube métallique ou tuyau en matériau synthétique comporte, d'une part, un corps (2) pourvu d'un embout fileté (4) et présentant un alésage (7) dans lequel sont disposés, respectivement, des moyens d'ancrage (13), des moyens dilatateurs (14), des moyens d'étanchéité (15) et une bague supérieure de retenue (16) et, d'autre part, une douille intérieure (17) emmanchée par force dans l'alésage (7) dudit corps (2).

    Pour le démontage, après montage sur l'extrémité d'un tube ou tuyau, de ce dispositif de raccordement rapide (1) tout en autorisant son application à des pressions élevées, ledit dispositif comporte, en outre, des moyens (45) pour annihiler les effets des moyens d'ancrage (13) en exerçant une pression sur la bague supérieure de retenue (16), ces moyens (45) étant associés aux moyens dilatateurs (14) interposés entre les moyens d'ancrage (13) et les moyens d'étanchéité (15).

FIG.1

EP 0 336 866 A1

Bundesdruckerei Berlin

## Description

## Raccord démontable

L'invention concerne un dispositif de raccordement rapide pour tube métallique ou tuyau en matériau synthétique comprenant, d'une part, un corps pourvu d'un embout fileté et présentant un alésage dans lequel sont disposés, respectivement, des moyens d'ancrage, des moyens dilatateurs, des moyens d'étanchéité et une bague supérieure de retenue et, d'autre part, une douille intérieure emmanchée par force dans l'alésage de ce corps.

Cette invention trouvera son application, plus particulièrement, chez les fabricants et utilisateurs de raccords intervenant dans des circuits hydrauliques à basse, haute ou très haute pression.

On connaît déjà, par les documents FR-A-2.578.306 et FR-A-2.582.771 un dispositif de raccordement rapide pour des tubes métalliques ou tuyaux en matériau synthétique véhiculant un fluide sous pression. Ce dispositif de raccordement rapide comporte, d'une part, un corps présentant un alésage dans lequel sont disposés des moyens dilatateurs servant de butée à des moyens d'ancrage du tube ou tuyau et coopérant avec des moyens d'étanchéité, le tout étant maintenu par une bague supérieure de retenue. D'autre part, ce dispositif est muni d'une douille intérieure emmanchée en force dans l'alésage du corps précité et pourvu d'un embout cylindrique sur lequel est enfilée l'extrémité du tube ou tuyau qu'il y a lieu de raccorder.

Il est indéniable que ce type de dispositif de raccordement rapide représente une parfaite efficacité même en cas d'utilisation dans des circuits de fluides sous pression élevée pouvant atteindre 150 bars.

Toutefois, leur inconvénient principal consiste en ce que leur montage sur l'extrémité d'un tube ou tuyau présente un caractère définitif. En effet, il n'existe aucune solution pour démonter à nouveau de tels dispositifs de raccordement rapide sans les détériorer ou sectionner le tube ou tuyau auquel ils sont associés.

Or, il peut s'avérer que, pour une raison quelconque, par exemple, une erreur dans le montage d'un circuit, il soit nécessaire de retirer le dispositif de raccordement rapide sur l'extrémité d'un tube ou tuyau. Cependant, le fait de détériorer ce dispositif de raccordement rapide est à l'origine d'une perte de temps considérable donc d'un coût de main-d'oeuvre élevé. Par ailleurs, sectionner l'extrémité dudit tube ou tuyau peut imposer le remaniement, en tout ou partie, de l'installation.

A ce propos, on connaît, également, par le document US-A-4.123.090 un dispositif de raccordement, comportant, tel que décrit ci-dessus, un corps pourvu d'un embout fileté et présentant un alésage dans lequel sont insérés des moyens d'ancrage. Ceux-ci sont constitués d'une rondelle de retenue pourvue de lamelles élastiques susceptibles de s'incruster dans l'extrémité du tube à raccorder. Ces moyens d'ancrage sont maintenus dans l'alésage du corps de ce dispositif de raccordement rapide au moyen d'un anneau élastique ou analogue.

De plus, un embout cylindrique, dont l'alésage central présente un diamètre ajusté à celui dudit tube à raccorder, est engagé, partiellement, dans l'alésage du corps et comporte une extrémité effilée susceptible de coopérer avec les lamelles élastiques des moyens d'ancrage précités. Aussi, en exerçant une pression sur la partie externe de cet embout cylindrique, son extrémité effilée provoque l'effacement desdites lamelles élastiques de la périphérie du tube à raccorder et assimile ainsi, l'effet des moyens d'ancrage.

Etant donné que l'embout cylindrique vient à s'interposer entre le pourtour externe du tube à raccorder et la paroi de l'alésage présent dans le corps de ce dispositif de raccordement rapide, il est nécessaire de garantir l'étanchéité tant entre ledit corps et cet embout cylindrique qu'entre ce dernier et le tube à raccorder. Ce dédoublement des moyens d'étanchéité provoque une augmentation proportionnelle des risques de fuite et rend plus difficile l'engagement du dispositif de raccordement sur l'extrémité d'un tube en raison de frottements d'intensité accrue. On remarquera d'ailleurs qu'en raison de leur configuration et de leur disposition dans des gorges usinées sur le pourtour externe et dans l'alésage de l'embout cylindrique, l'efficacité des moyens d'étanchéité est directement dépendante de leur précontrainte au moment du montage. Ceci signifie que le dispositif de raccordement rapide, décrit dans ce document antérieur, n'est applicable qu'à des circuits hydrauliques soumis à des faibles pressions.

Finalement, l'absence de douille intérieure dans ce dispositif de raccordement rapide connu, limite son utilisation à des tubes rigides.

La présente invention a pour but de remédier aux inconvénients précités. L'invention telle qu'elle est caractérisée dans les revendications résout le problème consistant à créer un dispositif de raccordement rapide pour tube métallique ou tuyau en matériau synthétique comprenant, d'une part, un corps pourvu d'un embout fileté et présentant un alésage dans lequel sont disposés, respectivement, des moyens d'ancrage, des moyens dilatateurs, des moyens d'étanchéité et une bague supérieure de retenue et, d'autre part, une douille intérieure emmanchée par force dans l'alésage dudit corps, ce dispositif de raccordement rapide comportant, en outre, des moyens pour annihiler les effets des moyens d'ancrage en exerçant une pression sur la bague supérieure de retenue, ces moyens étant associés aux moyens dilatateurs interposés entre les moyens d'ancrage et les moyens d'étanchéité.

Les avantages obtenus grâce à cette invention consistent, essentiellement, en ce qu'une simple pression exercée sur la bague supérieure de retenue, depuis l'extérieur au dispositif de raccordement rapide, permet de provoquer l'effacement des moyens d'ancrage par rapport au tube ou tuyau et, finalement, de retirer l'extrémité de ce dernier du dispositif de raccordement. Cependant, il convient de remarquer que la pression exercée sur la bague supérieure de retenue n'est répercutée sur les moyens d'ancrage qu'au travers des moyens d'étanchéité, d'une part, et des moyens dilatateurs, d'autre part. Ceci permet de conserver des moyens d'étanchéité uniques dont l'efficacité tend à croître avec la pression du fluide véhiculé dans un circuit hydraulique et, finalement, d'autoriser l'application de ce dispositif de raccordement rapide à des pressions élevées, de l'ordre de 150 bars.

L'invention est exposée ci-après, plus en détail à l'aide de dessins représentant seulement un mode d'exécution.

- la figure 1 repésente une vue en élévation et en coupe partielle du dispositif de raccordement rapide conforme à l'invention et montée sur l'extrémité d'un tube ou tuyau

- la figure 2 représente une vue en élévation et en coupe partielle du corps du dispositif de raccordement rapide

- la figure 3 repésente une vue en élévation et en coupe de la rondelle de retenue constituant les moyens d'ancrage

- la figure 4 représente une vue agrandie de la section d'un joint d'étanchéité

- la figure 5 repésente une vue agrandie de la section de la bague formant les moyens dilatateurs

- la figure 6 repésente une vue agrandie de la section de la bague supérieure de retenue.

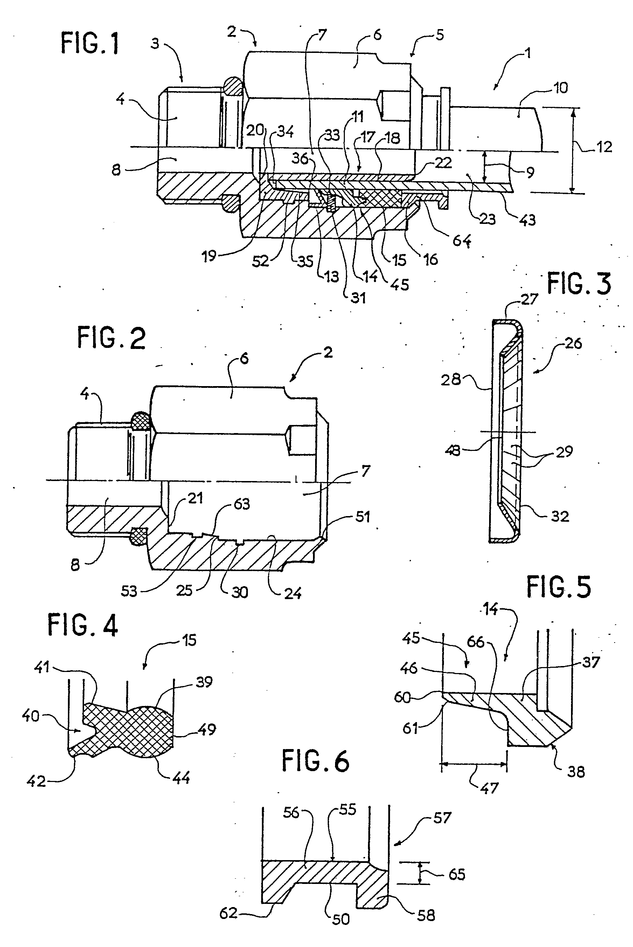

Le dispositif de raccordement rapide 1 conforme à l'invention et représenté dans les figures 1 et 2 est destiné à être appliqué, soit sur un tube rigide, par exemple en acier, cuivre ou aluminium, sans préparation préalable des extrémités, soit sur un tube de nature souple ou semi-rigide en matériau synthétique, notamment, en polyamide.

Ainsi, ce dispositif de raccordement rapide 1 comporte un corps 2 pourvu, à une extrémité 3, d'un embout fileté 4 et à l'autre extrémité 5 d'un six pans 6. Ce dernier sert, essentiellement, à visser l'embout fileté 4 dans un trou taraudé d'un raccord femelle non représenté dans les figures.

Ledit corps 2 comporte, en outre, un alésage 7 débouchant, du côté de l'embout fileté 4, dans un orifice 8, de diamètre sensiblement égal au diamètre interne 9 de la conduite constituée par le tube ou tuyau 10 à l'extrémité 11 duquel il convient de rapporter le dispositif de raccordement rapide 1.

Dans cet alésage 7 de diamètre supérieur au diamètre 12 dudit tube ou tuyau 10 prennent place des moyens d'ancrage 13, des moyens dilatateurs 14, coopérant avec des moyens d'étanchéité 15 et une bague supérieure de retenue 16 assurant le maintien de ces différents éléments.

Par ailleurs, le dispositif de raccordement rapide 1 comporte une douille intérieure 17 comprenant, d'une part, un embout cylindrique 18 sur lequel est enfilée l'extrémité 11 du tube ou tuyau 10 et, d'autre part, une portée cylindrique 19 emmanchée par force dans l'alésage 7 du corps 2. Plus précisément, l'extrémité 20, orientée vers l'embout fileté 4 de cette douille intérieure 17 vient buter contre l'épaulement 21 situé dans l'alésage 7 et obtenu en raison de la différence du diamètre de ce dernier et de celui de l'orifice 8. Quant à l'autre extrémité 22 de cette douille intérieure 17, celle-ci est, de préférence, chanfreinée de manière à faciliter l'engagement de l'embout cylindrique 18 dans la partie interne 23 du tube ou tuyau 10.

Par ailleurs, l'alésage 7 présente un décrochement 24 permettant de définir un épaulement 25 contre lequel prennent appui les moyens d'ancrage 13 cités plus haut et représentés dans la figure 3. Préférentiellement, ceux-ci sont contitués, par une rondelle de retenue 26 formée par un anneau extérieur 27 de diamètre ajusté à celui de l'alésage 7, au niveau du décrochement 24, et dont le chant 28 coopère avec l'épaulement 25. Cet anneau extérieur 27 comporte, en outre, une pluralité de lamelles élastiques 29 sensiblement inclinées en direction de l'embout fileté 4. Ainsi, sous l'effet d'une traction exercée sur le tube ou tuyau 10, ces lamelles élastiques 29 sont amenées à s'incruster dans l'extrémité 11 de ce dernier et s'opposent à son dégagement du dispositif de raccordement rapide 1.

Toutefois, pour s'assurer de l'efficacité des moyens d'ancrage 13, il est indispensable d'éviter tout coulissement de la rondelle de retenue 26 dans l'alésage 7 du corps 2. A cet effet, et selon une caractéristique de l'invention, l'alésage 7 présente, au niveau du décrochement 24 et à une distance de l'épaulement 25 légèrement supérieure à l'épaisseur de la rondelle de retenue 26, une rainure circulaire 30. Dans celle-ci est engagé un anneau élastique 31, dénommé encore circlips, coopérant avec le chant 32 de cette rondelle de retenue 26 et la maintenant en position dans l'alésage 7 en cas d'un effort exercé sur le tube ou tuyau 10 tendant à extraire celui-ci du dispositif de raccordement rapide 1. A noter que le diamètre interne de cet anneau élastique ou du circlips 31 est sensiblement supérieur au diamètre externe 12 du tube ou tuyau 10 de manière à définir avec ce dernier un espace annulaire 33.

Dans le but d'éviter que les lamelles élastiques 29 ne viennent à s'incruster dans le tube ou tuyau 10 à proximité immédiate du chant 34 de celui-ci, la portée cylindrique 19 de la douille intérieure 17 comporte sur sa face 36 un évidement circulaire 35 disposé dans le prolongement de l'embout cylindrique 18. Dans cet évidement circulaire 35 est insérée l'extrémité du tube ou tuyau 10 de manière à remédier au problème précité.

Contre l'anneau élastique 31 sont appliqués des moyens dilatateurs 14 (voir figure 5) formés par une bague 37 ajustée au diamètre de l'alésage 7 au niveau du décrochement 24. Cette bague 37 présente une forme de coin au niveau de son chant 38 orienté vers les moyens d'étanchéité 15 et ayant pour office de provoquer la dilatation radiale de ces derniers.

Préférentiellement, les moyens d'étanchéité 15 sont constitués, tels que représentés dans les figure 1 et 4, par un joint 39 pourvu d'un côté 40 de deux lèvres circulaires 41, 42, coopérant, respectivement, avec le pourtour externe 43 du tube ou tuyau 10 et la paroi de l'alésage 7 au niveau du décrochement 24. Ces lèvres 41, 42 respectent, entre elles, un angle leur permettant d'épouser intimement, la forme en coin du chant 38 de la bague 37 formant les moyens dilatateurs 14. Quant au joint 39, celui-ci est constitué subtantiellement, par un bourrelet torique 44 permettant d'obtenir une zone d'étanchéité supplémentaire entre l'alésage 7 du corps 2 et le tube ou tuyau 10.

On se réfère plus particulièrement aux figures 1 et 5.

Selon une caractéristique de l'invention, le dispositif de raccordement rapide 1 comporte des moyens 45 susceptibles d'agir sur la rondelle de retenue 26 constituant les moyens d'ancrage 13 afin d'annihiler leurs effets à l'égard du tube ou tuyau 10 pour, finalement, autoriser le retrait de ce dernier du corps 2.

Avantageusement, ces moyens 45 sont solidaires des moyens dilatateurs 14 et sont formés par une collerette cylindrique 46 aux dimensions définies par l'espace annulaire 33 délimité par l'anneau élastique 31 et le pourtour externe 43 du tube ou tuyau 10. Cette collerette cylindrique 46 est solidaire du chant 66, orienté vers l'embout fileté 4, de la bague 37. Ainsi, sous l'action d'une pression exercée sur cette dernière, ladite collerette cylindrique 46 est amenée à s'introduire dans l'espace annulaire 33 et à coopérer avec la rondelle de retenue 26 située de l'autre côté de l'anneau élastique 31. Pus exactement, la collerette cylindrique 46 coopère avec les lamelles élastiques 29 et provoque leur effacement de la périphérie externe 43 du tube ou tuyau 10. A noter que cette collerette cylindrique 46 comporte à son extrémité libre 60, un chanfrein 61 facilitant son insertion entre des lamelles élastiques 29 et le tube ou tuyau 10. Elle peut, également, présenter une forme légèrement tronconique contribuant à son efficacité.

Préférentiellement, la longueur 47 de cette collerette cylindrique 46 est définie de sorte qu'elle ne dépasse pas l'extrémité libre 48 des lamelles élastiques 29, lorsque la bague 37 vient buter contre l'anneau élastique 31. Cette caractéristique permet de ramener ladite bague 37 dans sa position initiale après avoir retiré le tube ou tuyau 10 et, finalement, libérer les lamelles élastiques 29 afin de rendre le dispositif de raccordement rapide réutilisable.

Selon l'invention, le coulissement de la bague 37 et l'intervention des moyens 45 sur la rondelle de retenue 26, sont commandés par l'intermédiaire de la bague supérieure de retenue 16 venant en appui contre la face 49 du joint 39. Ainsi, cette bague supérieure de retenue 16 présente un diamètre légèrement inférieur à l'alésage 7 au niveau du décrochement 24 de manière à coulisser sur ce dernier. De plus, ladite bague supérieure de retenue 16, présente, sur son pourtour externe 62, un décrochement 50 définissant un épaulement 67 destiné à coopérer avec un sertissage 51 réalisé au niveau du corps 2 en sortie de l'alésage 7.

La fonction de ce sertissage 51 consiste à maintenir, dans l'alésage 7, essentiellement, les moyens d'étanchéité 15 et la bague supérieure de retenue 16. Il convient, en effet, de remarquer, d'une part, que les moyens d'ancrage 13 sont immobilisés par l'intermédiaire de l'anneau élastique 31 et d'autre part, que la douille intérieure 17 est engagée en force dans l'alésage 7. Par ailleurs, et selon un mode de réalisation préférentiel, la douille intérieure 17 et, notamment, sa portée cylindrique 19 est munie d'un rebord périphérique 52 venant s'insérer dans une rainure circulaire 53 usinée dans l'alésage 7. Cette caractéristique améliore considérablement la tenue mécanique de la douille intérieure 17 dans le corps 2. Cependant, dans ces conditions, il est nécessaire d'aménager dans l'alésage 7, au niveau de l'épaulement 25, une zone tronconique 63 facilitant l'emmanchement de la douille intérieure 17 et, notamment, l'engagement du rebord périphérique 52 dans la rainure circulaire 53 correspondante.

Ainsi, en raison, d'une part, de cette disposition particulière des différents éléments 13, 14, 15, 16, 17 dans l'alésage 7 et, d'autre part, de la propriété de la bague supérieure de retenue 16 de coulisser dans ce dernier, il est possible d'amener la collerette cylindrique 46 en position active et d'annihiler les effets des moyens d'ancrage 13 en appliquant une simple pression sur ladite bague supérieure de retenue 16 tentant à la repousser dans l'alésage 7. Dans ce but, cette bague supérieure de retenue 16 est prolongée, au niveau de son décrochement 50 par un élément tubulaire 55 émergeant sensiblement de l'alésage 7 du corps 2. Les dimensions de cet élément tubulaire 55 et, notamment, son diamètre intérieur et l'épaisseur de sa paroi 56 sont déterminées en fonction de l'espace annulaire 64 délimité par le sertissage 51 et le pourtour externe 43 du tube ou tuyau 10. Etant donné que ladite paroi 56 présente, nécessairement, une épaisseur 65 réduite, l'élément tubulaire 55 comporte à son extrémité libre 57 un renfort 58 formé par un bourrelet ou rebord périphérique. Sur ce dernier peut être appliqué l'outil destiné à repousser la bague supérieure de retenue 16 dans l'alésage 7. Cette pression est, initialement, répercutée sur les moyens d'étanchéité 15 provoquant le coulissement des moyens dilatateurs dans l'alésage 7 et, finalement, le détachement des moyens d'ancrage 13 du tube ou tuyau 10.

L'avantage incontestable d'un tel dispositif de raccordement rapide 1, réside dans son utilisation possible à des pressions élevés tout en étant démontable, en un minimum de temps, au moyen d'un outillage classique.

**Revendications**

1. Dispositif de raccordement rapide (1) pour tube métallique ou tuyau en matériau synthétique (10) comprenant, d'une part, un corps (2) pourvu d'un embout fileté (4) et présentant un alésage (7) dans lequel sont disposés, respectivement, des moyens d'ancrage (13), des moyens dilateurs (14), des moyens d'étanchéité (15) et une bague supérieure de retenue (16) et, d'autre part, une douille intérieure (17) emmanchée par force dans l'alésage (7) dudit corps (2), dispositif caractérisé par le fait qu'il comporte des moyens (45) pour annihiler les effets des moyens d'ancrage (13) en exerçant une pression sur la bague supérieure de retenue (16), ces moyens (45) étant associés aux moyens dilatateurs (14), interposés entre les moyens d'ancrage (13) et les moyens d'étanchéité (15).

2. Dispositif de raccordement rapide (1) selon la revendication 1, caractérisé par le fait que les moyens (45) sont formés par une collerette cylindrique (46) solidaire du chant (66), orientée vers l'embout fileté (4), d'une bague (37) constituant les moyens dilatateurs (14), cette bague (37) étant située à l'arrière d'un anneau élastisque (31) maintenant en position les moyens d'ancrage (13) dans l'alésage (7) du corps (2).

3. Dispositif de raccordement rapide (1) selon la revendication 2, caractérisé par le fait que la collerette cylindrique (46) présente des dimensions ajustées à l'espace annulaire (33) délimité par l'anneau élastique (31) et le pourtour externe (43) du tube ou tuyau (10) de manière à coopérer avec les moyens d'ancrage (13) et, notamment, avec des lamelles élastiques (29) solidaires de ces derniers et coopérant avec ledit tube ou tuyau (10).

4. Dispositif de raccordement rapide (1) selon la revendication 3, caractérisé par le fait que la collerette cylindrique (46) comporte une longueur (47) définie de sorte qu'en position de butée de la bague (37) contre l'anneau élastique (31), l'extrémité (60) de cette collerette cylindrique (46) se présente légèrement en retrait par rapport à l'extrémité libre (48) des lamelles élastiques (29).

5. Dispositif de raccordement rapide (1) selon les revendications 3 et 4 caractérisé par le fait que la collerette cylindrique (46) est chanfreinée à son extrémité (60) et comporte une forme légèrement tronconique.

6. Dispositif de raccordement rapide (1) selon la revendication 1 caractérisé par le fait que la bague supérieure de retenue (16), comportant sur son pourtour externe (62) un décrochement (50), est prolongée au niveau de ce dernier par un élément tubulaire (55) émergeant sensiblement de l'alésage (7) du corps (2) au travers d'un espace annulaire (64) délimité par un sertissage (51) réalisé à l'extrémité (5) dudit corps (2), en sortie de l'alésage (7), et par le pourtour externe (43) du tube ou tuyau (10).

7. Dispositif de raccordement rapide (1) selon la revendication 6 caractérisé par le fait que l'élément tubulaire (55) comporte à son extrémité libre (57) un renfort (58) formé par un bourrelet ou rebord périphérique sur lequel peut être appliqué un outil destiné à repousser la bague supérieure de retenue (16) dans l'alésage (7).

8. Dispositif de raccordement rapide (1) selon la revendication 1 caractérisé par le fait que la douille intérieure (17), comportant un embout cylindrique (18) et une portée cylindrique (19), est pourvue, au niveau de cette dernière, d'un rebord périphérique (52) venant s'insérer dans une rainure circulaire (53) usinée dans l'alésage (7).

EP 0 336 866 A1

FIG.1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 060 106 (C.E. & J.P. BRITTON) * figure 1 * | 1 | F 16 L 37/08 |
| A | | 2,4,5,7 | |
| A | US-A-4 123 090 (KOTSAKIS et al.) * figures 3,4,7 * | 1,3-7 | |
| A | FR-A-2 591 309 (CAPRI-CODEC) * figure 1 * | 1 | |
| A | GB-A-2 160 279 (HAWKE CABLE GLANDS) * figure 5 * | 1,8 | |
| A | DE-U-1 988 017 (PNEUMELEC) * figure 1 * | 1 | |
| D,A | FR-A-2 578 306 (FLEXIBLES ANOFLEX et al.) | | |
| D,A | FR-A-2 582 771 (FLEXIBLES ANOFLEX et al.) | | |

**DOMAINES TECHNIQUES RECHERCHES (Int. Cl.4)**

F 16 L 37/00

Le présent rapport a été établi pour toutes les revendications

| Lieu de la recherche | Date d'achèvement de la recherche | Examinateur |
|---|---|---|
| BERLIN | 26-05-1989 | SCHLABBACH M |